Europäisches Patentamt

European Patent Office

Office européen des brevets

(19)

(11) Publication number: **0 010 606**
**B1**

(12) **EUROPEAN PATENT SPECIFICATION**

(45) Date of publication of patent specification: **15.08.84**

(51) Int. Cl.³: **G 11 B 5/016, G 11 B 17/02**

(21) Application number: **79103511.6**

(22) Date of filing: **19.09.79**

(54) Flexible disk pack assembly.

(30) Priority: **02.10.78 US 947389**

(43) Date of publication of application:
**14.05.80 Bulletin 80/10**

(45) Publication of the grant of the patent:
**15.08.84 Bulletin 84/33**

(84) Designated Contracting States:
**DE FR GB**

(56) References cited:
**US - A - 3 110 889**
**US - A - 3 936 880**
**US - A - 3 969 767**

(73) Proprietor: **International Business Machines Corporation**
**Old Orchard Road**
**Armonk, N.Y. 10504 (US)**

(72) Inventor: **Laman, William Henry**
**1478 N. Calle Hermosa**
**Tucson Arizona 85715 (US)**

(74) Representative: **Lancaster, James Donald**
**IBM United Kingdom Patent Operations Hursley Park**
**Winchester, Hants, S021 2JN (GB)**

Courier Press, Leamington Spa, England.

## Description

This invention relates to a disk pack assembly having a plurality of flexible disks mounted on a rotary drive shaft, and a plenum chamber supplying gas which is exhausted outwardly between the disks, the plenum chamber having valve means and gas source means for changing gas flow to the plenum chamber for different transducer access states of the disks.

Such flexible disk pack assemblies are known e.g. in U.S. Patent 3,936,880, and in EP—A—8690 (IBM). These assemblies have different transducer access states for accessing the disks, two of which are the stable state, and the bistable state, for which different pressures are established in the plenum chamber. In the stable access state, portions of the edges of adjacent disks can be longitudinally separated to create a partial split, by means of some external force of disturbance. When the external force or disturbance is removed while in the stable access state, the partial split closes. In the bistable access state, an external force or disturbance is used to cause an access opening to be created between preselected disks so that a read/write head can be inserted for accessing a disk. When the external force is removed in the bistable access state, the access opening is maintained or sustained until the access state is changed from the bistable to the stable.

In the above U.S. Patent, the arrangements disclosed involve establishing preset pressures in the plenum chamber for the different access states. In the above European·application, the arrangement disclosed involves establishing predetermined pressures in the plenum chamber relative to atmospheric pressure i.e. for example in the bistable state, a predetermined pressure difference is maintained between the plenum chamber and the atmosphere.

Thus these access states have been considered as functions of absolute, or relative, pressure in the plenum chamber, and pressure has been the regulated parameter. This pressure was chosen having regard to desired operating characteristics. Operating the disk pack assembly in the bistable access state at a pressure near the lower limit for that access state gives rapid opening of adjacent disks for transducer access, but slow closing. Operating the disk pack assembly in the bistable access state at a pressure near the upper limit for that access state gives slower opening but quick closing.

It has been found that such disk pack assemblies may be adversely affected by variations in ambient pressure. Such variations can cause undesirable changes in the operating characteristics of the assembly, or even change the access state, especially if the assembly is designed to operate at a pressure near one of the limits for that access state.

Actually it has been found that not only variations in ambient pressure, but also variations in ambient temperature, can cause unacceptable operational changes. As a general indication of possible significant magnitudes of such variations, for example a pressure variation may be one resulting from a change in altitude in the atmosphere of 2100 metres or more, and a temperature variation may be 55.6 K (100°F) or more. However the present invention is not limited to variations of such magnitude, or even to variations in only pressure and temperature since additional conditions can be involved e.g. relative humidity.

This invention is based on the realisation that it is more accurate to regard an access state as dependent on mass flow of gas between the disks, rather than on a preset pressure, or a predetermined relative pressure, in the plenum chamber. In the embodiment of the invention described hereinafter, both the absolute pressure in the plenum chamber, and the pressure relative to atmospheric pressure, change with changes in for example atmospheric pressure.

A disk pack assembly according to the invention is provided with regulator means responsive to temperature and/or pressure of the gas for maintaining mass flow of gas between the disks constant in a said transducer access state of the disks, over a range or ranges of values of said temperature and/or pressure of the gas.

U.S. Patent 3,208,056 discloses a magnetic recorder having a single flexible disk which is rotated in close proximity to a stabilising fixed back plate incorporating a number of transducers. Disk-to-plate spacing is controlled by regulating the air flowing through a valve opening in a manifold leading to the disk hub, from where the air flows outwardly between the disk and the plate. The objective of the air flow control is to maintain the disk-to-plate spacing constant with variations in temperature and pressure. The specification states in particular that as temperature increases, the temperature sensitive element decreases the valve opening in the manifold (which is the opposite of the action in the present invention as will be discussed hereinafter). There is no counterpart express statement about the effect of a pressure change on the valve opening. The specification is not concerned with maintaining a transducer access state of a plurality of flexible disks mounted on a rotary drive shaft, as is the present invention, and in the present invention the problem of maintaining a constant disk-to-plate spacing does not arise. Also there is no statement about maintaining a constant mass of flow of gas over a range or ranges of values of temperature and/or pressure.

In the accompanying drawings:—

FIG. 1 is a graph used in explaining the invention;

FIG. 2 shows a disk pack assembly according to an embodiment of the invention; and

FIG. 3 is an enlarged diagrammatic illustration, mainly in cross section, of details of FIG. 2.

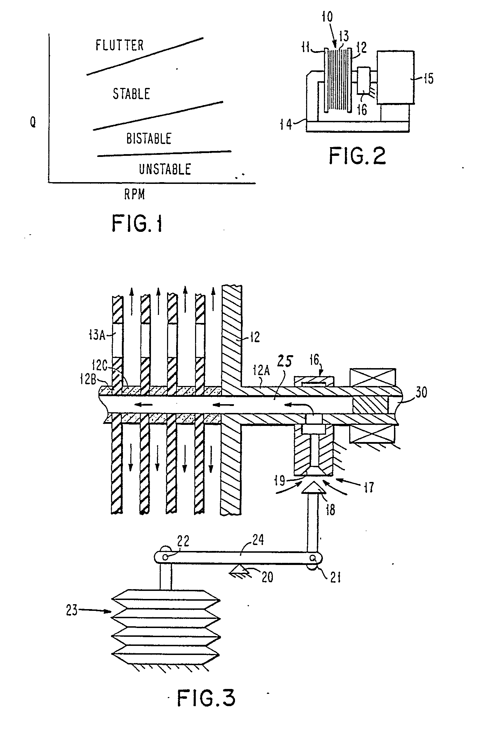

Figure 1 shows the relationship between mass flow of gas (Q) against rotational speed (RPM), for a flexible disk pack assembly according to the invention, for what can conveniently be taken as the boundaries between the various transducer access states of the disks, although it will be appreciated that these boundaries are not sharply defined. Reference has already been made to the stable and bistable access states. In the unstable state, the disks can take unpredictable axial relationships with each other, and in the flutter state, the disks flutter as they rotate.

From Figure 1 different mass flow limits can be read off for the difference acess states, at any given rotational speed.

In Figure 2, a record storage apparatus 10 consists of a disk pack assembly including a plurality of flexible record storage disks 13 disposed between a pair of spaced rigid stabilizing end plates 11, 12. The disks and end plates are suitably mounted for rotation on a frame 14. A motor 15 on frame 14 rotates the disks and end plates as a unitary assembly. For maintaining, in this embodiment, the disks 13 in the bistable transducer access state, a mass air flow controller 16 is included, which is described in more detail with reference to Fig. 3.

In Fig. 3, end plate 12 is shown as having an axially extending tubular spindle portion 12A which projects through the mass air flow controller 16. Tubular spindle portion 12A rotates in bearings, not shown, in controller 16, and its interior 25, which forms the plenum chamber of the assembly, is in fluid communication with a valve 17.

Air from the atmosphere enters through valve 17 and flows through tubular spindle portion 12A to tubular spindle portion 12B. Tubular spindle portion 12B consists of alternate hub portions of disks 13 and air-permeable spacers 12C, the assembly being bonded together and to the end plates 11 and 12. The air flows through the spacers 12C, and radially outwardly as indicated by the arrows between disks 13. The disk pack assembly of Fig. 3 is a self-vented type, i.e. rotation of the disks 13 induces the air flow. Each of the disks 13 has a plurality of circumferentially spaced pressure equalization apertures 13A, positioned close to the tubular spindle 12B.

Valve 17 has a needle valve member 18, cooperable with a valve seat 19. A bellows-type aneroid barometer actuator 23 is continuously responsive to a first variable physical condition of the ambient air, namely the ambient atmosphere pressure, so that as the ambient pressure falls, actuator 23 expands. The actuator 23 is connected by a bimetal actuator in the form of a lever 24 pivotable on fulcrum 20 to valve member 18 via pivots 22, 21, the lever deforming in response to changes in a second variable physical condition of the ambient air, namely the ambient atmospheric temperature. The lever 24 is chosen such that, as the temperature rises, valve 17 opens more. Fulcrum 20 and actuator 23 are suitably mounted on frame 14. The actuators 23, 24 and the valve 17 constitute a regulator means operable to maintain constant the mass flow of air between the disks in the bistable access state, over a range of values of ambient pressure and a range of values of ambient temperature. As the temperature falls and pressure rises, valve 17 is progressively closed to maintain the mass flow of air through tubular spindle portions 12A, 12B and between the disks constant. As the temperature rises and pressure falls, valve 17 is automatically progressively opened again to maintain the mass flow of air between the disks the same.

The above description relates to a simple form of disk pack assembly, and many variations are possible. For example the assembly can be of the forced-air-flow type, rather than the self-vented type, by connecting an air pump to end 30 of spindle portion 12A after the sealing plug therein has been removed. Valve 17 would act as a bleed valve, and an appropriate design would be chosen, and again the arrangement would maintain constant mass flow of air between the disks, for variations in ambient pressure and temperature, which are assumed to affect output of pressurised atmospheric air from the air pump. The valve 17 would be arranged to bleed more air as ambient pressure rose, and/or as ambient temperature fell.

Normally a disk pack assembly according to the invention will be "switchable" to other transducer access states than the bistable state e.g. the stable state or the unstable state. For example in Fig. 3, these states could be achieved respectively by modifying controller 16 selectively to allow air at atmospheric pressure to enter the plenum chamber 25, and to prevent substantially entry of any air into the plenum chamber, even by way of the valve 17.

As previously indicated, the invention is not limited to variations in only pressure and temperature, since for example relative humidity of ambient air can affect mass flow. In the embodiment of Fig. 3, it will be appreciated that if only ambient pressure variations are to be taken into account, because in the circumstances envisaged it is assumed that temperature variations will be negligible, the bimetal lever 24 can be replaced by an ordinary lever. Alternatively in a constant pressure but variable temperature environment, the actuator 23 could be omitted and the lever 24 could be locked at the fulcrum 20.

It will also be appreciated that the invention is applicable to disk pack assemblies operating in gas environments other than air. Such gas may for example fill a sealed chamber containing the disk pack assembly, and the associated valve means and gas source means.

## Claims

1. Disk pack assembly having a plurality of flexible disks (13) mounted on a rotary drive shaft (12A, 12B), and a plenum chamber (25) supplying gas which is exhausted outwardly between the disks, the plenum chamber having valve means and gas source means for changing gas flow to the plenum chamber for different transducer access states of the disks, characterised in that said valve means and gas source means includes regulator means (23, 24, 17) responsive to temperature and/or pressure of the gas to maintain constant mass flow of gas between the disks, in a said transducer access state of the disks, over a range or ranges of values of said temperature and/or pressure of the gas.

2. Disk pack assembly as claimed in claim 1 in which said regulator means comprises a gas inlet valve (17) having a needle valve member (18).

3. Disk pack assembly as claimed in claim 2 in which the gas is ambient air, and said regulator means includes an aneroid barometer actuator (23), continuously responsive to changes in ambient atmospheric pressure.

4. Disk pack assembly as claimed in claim 2 or 3 in which the gas is ambient air and said regulator means includes a bimetal actuator (24) continuously responsive to changes in ambient atmospheric temperature.

5. Disk pack assembly as claimed in claim 4 as dependent on claim 3, in which said bimetal actuator is a lever (24) which couples said aneroid barometer actuator to said needle valve member.

6. Disk pack assembly as claimed in any preceding claim in which said access state is the bistable transducer access state of the disks.

## Revendications

1. Assemblage à disques comportant une pluralité de disques flexibles (13) montés sur un arbre rotatif d'entraînement (12A, 12B), une chambre stabilisatrice (25) d'alimentation de gaz qui est déchargée vers l'extérieur entre les disques, la chambre stabilisatrice comportant des moyens formant valve et des moyens formant source de gaz pour changer l'écoulement de gaz vers la chambre stabilisatrice pour différents états d'accès de transducteur des disques, caractérisé en ce que lesdits moyens formant valve et lesdits moyens formant source de gaz comprennent un moyen régulateur (22, 24, 17) répondant à une température et/ou une pression du gaz pour maintenir constant un débit pondéral de gaz entre les disques, dans ledit état d'accès du transducteur auxdits disques, dans une ou plusieurs gammes de valeurs desdites températures et/ou pression du gaz.

2. Assemblage à disques selon la revendication 1, dans lequel ledit moyen régulateur comprend une valve d'entrée de gaz (17) comportant un élément de valve (18) en forme d'aiguille.

3. Assemblage à disques selon la revendication 2, dans lequel le gaz est de l'air ambiant, et ledit moyen régulateur comprend un organe d'actionnement de baromètre anéroïde (23), répondant de façon continue à des variations de pression atmosphérique ambiante.

4. Assemblage à disques selon la revendication 2 ou 3, dans lequel le gaz est de l'air ambiant, et ledit moyen régulateur comprend un organe d'actionnement bimétallique (24) répondant de façon continue à des variations de la température atmosphérique ambiante.

5. Assemblage à disques selon la revendication 4, prise en dépendance de la revendication 3, dans lequel ledit organe d'actionnement bimétallique est un levier (24) qui accouple ledit organe d'actionnement de baromètre anéroïde audit élément de valve en forme d'aiguille.

6. Assemblage à disques selon l'une quelconque des revendications précédentes, dans lequel ledit état d'accès est l'état bistable d'accès transducteur ausdits disques.

## Patentansprüche

1. Plattenstapelaufbau mit einer Anzahl flexibler Platten (13), welche auf einer Antriebswelle (12A, 12B) angebracht sind, und einer Plenumkammer (25), welche Gas liefert, das zwischen den Platten nach außen abgesaugt wird, wobei die Plenumkammer Ventilmittel und Gasquellenmittel zur Veränderung des Gasstromes zur Plenumkammer für verschiedene Wandlerzugriffszustände der Platten aufweist, dadurch gekennzeichnet, daß die Ventilmittel und Gasquellenmittel auf die Temperatur und/oder den Druck des Gases ansprechende Regulierungsmittel (23, 24, 17) zur Konstanthaltung des Massestroms des Gases zwischen den Platten, in einem genannten Zugriffszustand der Platten, über einen Bereich bzw. über Bereiche von Werten für die Temperatur und/oder den Druck des Gases enthalten.

2. Plattenstapelaufbau nach Anspruch 1, bei welchem die Regulierungsmittel ein Gaseinlaßventil (17) mit einem Nadelventilelement (18) umfassen.

3. Plattenstapelaufbau nach Anspruch 2, bei welchem das Gas Umgebungsluft ist und die Regulierungsmittel einen Aneroidbarometer-Steller (23), der kontinuierlich auf Änderungen des atmosphärischen Umgebungsdrucks anspricht, enthalten.

4. Plattenstapelaufbau nach Anspruch 2 oder 3, bei welchem das Gas Umgebungsluft ist und die Regulierungsmittel einen Bimetallsteller (24), der kontinuierlich auf Änderungen der atmosphärischen Umgebungstemperatur anspricht, enthalten.

5. Plattenstapelaufbau nach Anspruch 4 in Rückbezug auf Anspruch 3, bei welchem der Bimetallsteller ein Hebel (24) ist, welcher den Aneroidbarometer-Steller mit dem Nadelventilelement verbindet.

6. Plattenstapelaufbau nach irgendeinem vorstehenden Anspruch, bei welchem der Zugriffszustand der bistabile Wandlerzugriffszustand der Platten ist.

# 0 010 606

FIG.1

FIG.2

FIG.3